# EUROPEAN PATENT SPECIFICATION

(11) **EP 4 232 205 B1**
(45) Date of publication and mention of the grant of the patent: **29.10.2025**
(21) Application number: 21795168.0
(22) Date of filing: 28.09.2021
(51) Int. Cl.: B05B 12/00

(54) **AUTONOMOUS VEHICLE WITH CONTROLLED NOZZLES**
AUTONOMES FAHRZEUG MIT GESTEUERTEN DÜSEN
VÉHICULE AUTONOME AVEC BUSES CONTRÔLÉES

(30) Priority: 30.11.2020 US 202063119132 P
(43) Date of publication of application: 30.08.2023
(73) Proprietor: HUSQVARNA AB, 561 82 Huskvarna (SE)
(72) Inventor: PRICE, Chris, Charlotte, North Carolina 28206 (US); KIRKPATRICK, Scott, Hickory, North Carolina 28602 (US); MCCLAY, James, Charlotte, North Carolina 28205 (US); MANDEVILLE, Ken, Midland, North Carolina 28107 (US)
(74) Representative: Meissner Bolte Nürnberg
(86) International application number: PCT/US2021/052327
(87) International publication number: WO 2022/115149

(56) References cited:
- GB-A- 2 573 061
- US-A1- 2018 160 672
- US-A1- 2019 255 551

## Description

### TECHNICAL FIELD

Example embodiments generally relate to robotic vehicles and, more particularly, relate to a robotic vehicle that sprays fluid over a specific area (e.g., for de-icing, fertilization, vegetation control, etc.) in an automated fashion with selectable different nozzles.

### BACKGROUND

Grounds maintenance tasks are commonly performed using various tools and/or machines that are configured for the performance of corresponding specific tasks. Certain tasks, like snow or ice removal, are typically performed using manually operated tools or vehicles. More recently, robotic devices and/or remote controlled devices have also become options for consumers to consider. In a de-icing context, the robotic device would typically spread rock salt over a surface that is intended to be cleared. However, salt can damage vegetation and other surfaces or objects that come into contact with the rock salt. Moreover, spreading rock salt is not easy to control, so the potential for undesirable or unforeseeable damage is further expanded.

From US 2018/160672 A1 a robotic agriculture apparatus comprising an autonomous delivery vehicle (ADV) is known, wherein the ADV is configured to autonomously perform an agricultural task over a predefined non-overlapping path. The ADV has hydraulic motors attached to a vehicle chassis, wherein the hydraulic motors motivate the ADV over the predefined non-overlapping path, wherein the ADV has a hydraulic pump attached to the vehicle chassis and fluidly coupled to drive the hydraulic motors, and wherein the ADV has a motive engine mechanically coupled to, and configured to drive, the hydraulic pump, attached to the vehicle chassis.

In GB 2573061 A a controller for a robotic device is disclosed, wherein the robotic device comprises a chassis, a spray gun for spraying material onto a surface, a camera, a rangefinder, and a data communication module in data communication with the spray gun, the camera and the laser rangefinder. The controller is configured for data communication with the data communication module, to receive data from the spray gun, the camera and the laser rangefinder, and to generate a representation on an operator display of a current spray pattern for the spray gun based on the received data.

US 2019/255551 A1 shows an apparatus for applying a coating to a surface of a structure. The apparatus comprises a mobile platform with a transport mechanism configured for powered movement along a floor or other surface which is interior to or immediately exterior to a structure; a robotic arm configured to be directed in a plurality of directions relative to the mobile platform, said robotic arm comprising a first end connected to the mobile platform and a free-floating second end; a servo-mechanism configured to dynamically position the second end of the arm at a dynamically adjustable position from a designatable area on the surface; a fluid reservoir configured to store a liquid coating; a fluid dispenser attached at or near the second end of the arm, said fluid dispenser configured to receive the liquid coating from the fluid reservoir and to dispense the liquid coating for application to the surface; a sensor configured to sense an environment of the apparatus, the environment comprising at least one of a relative position of the apparatus in relation to the designatable area on the surface and a feature of the surface; a memory configured to store instructions for coating the surface of the structure; and a hardware processor; wherein the apparatus is configured to autonomously apply the liquid coating to a plurality of designated areas on the surface, thereby covering the surface with the coating.

Accordingly, it may be desirable to provide additional options for servicing or maintaining grounds that overcome some of the difficulties described above.

### SUMMARY

The invention is set forth in the annexed independent claims. Embodiments result from the dependent claims and the below description.

### BRIEF SUMMARY OF SOME EXAMPLES

Some example embodiments provide a robotic vehicle. The robotic vehicle includes a chassis supporting a storage tank in which an aqueous solution is contained, a mobility assembly operably coupled to the chassis to provide mobility for the robotic vehicle about a service area, a positioning module configured to provide guidance for the robotic vehicle during transit of the robotic vehicle over the service area, a spray assembly and control circuitry. The spray assembly is operably coupled to the storage tank to spray the aqueous solution via a nozzle and a pump during the transit of the robotic vehicle over the service area. The control circuitry is operably coupled to the spray assembly. The control circuitry is configured to determine characteristics of the nozzle to control an amount of the aqueous solution applied to the service area based on the characteristics of the nozzle.

In another example embodiment, a spray assembly for a robotic vehicle is provided. The spray assembly includes a pump operably coupled to a storage tank in which an aqueous solution is contained, a nozzle operably coupled to the storage tank via the pump to generate a spray pattern for spraying the aqueous solution responsive to operation of the pump as the robotic vehicle transits a service area, and a nozzle receiver configured to receive the nozzle. The nozzle receiver further includes a nozzle interface operably coupled to processing circuitry of the robotic vehicle. Characteristics of the nozzle may be determinable by the control circuitry to control an amount of the aqueous solution applied to the service area based on the characteristics of the nozzle.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates an example operating environment for a robotic vehicle of an example embodiment;
FIG. 2 illustrates a block diagram of various components of control circuitry to illustrate some of the components that enable or enhance the functional performance of the robotic vehicle and to facilitate description of an example embodiment;
FIG. 3 illustrates a block diagram of various components that may be employed as part of a charging station in accordance with an example embodiment;
FIG. 4 illustrates a block diagram of a spray assembly in accordance with an example embodiment;
FIG. 5 illustrates a perspective view of a robotic vehicle demonstrating a spray pattern according to an example embodiment;
FIG. 6 is a side view of the robotic vehicle in accordance with an example embodiment;
FIG. 7 illustrates a perspective view of a robotic vehicle demonstrating a different spray pattern according to an example embodiment;

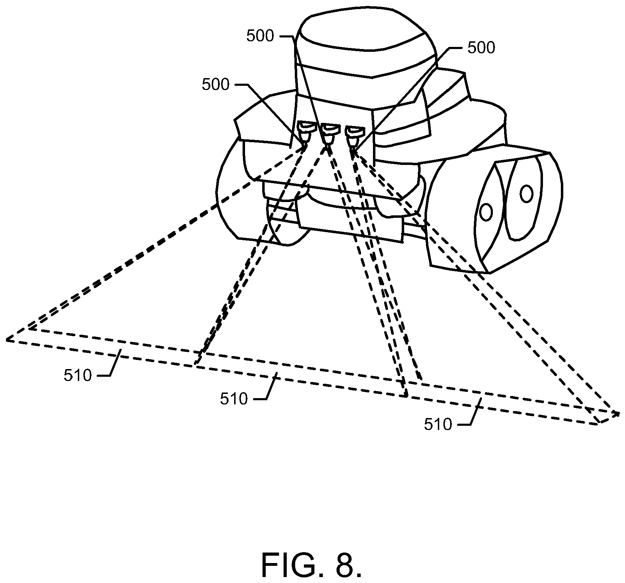

FIG. 8 illustrates a perspective view of a robotic vehicle demonstrating a spray pattern formed by simultaneous operation of three nozzles according to an example embodiment;
FIG. 9 illustrates a perspective view of a robotic vehicle demonstrating a spray pattern formed by simultaneous operation of two of the three nozzles shown in FIG. 8 according to an example embodiment;
FIG. 10 illustrates a perspective view of a robotic vehicle demonstrating a spray pattern formed by operation of only one of the three nozzles of FIG. 8 according to an example embodiment;
FIG. 11 illustrates a perspective view of a robotic vehicle demonstrating a spray pattern formed by simultaneous operation of three nozzles with at least one such nozzle having a different spray pattern according to an example embodiment; and
FIG. 12 is a block diagram of information processing and instructions managed by a flow controller in accordance with an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other.

A robotic deicer, may be an example of a robotic vehicle capable of performing deicing functions over an area that is defined by a boundary or other means. The robotic deicer may be configured to apply a deicing solution (i.e., not rock salt) within the boundary to ensure that the entire bounded area is relatively free of ice or snow. A boundary wire may be one way to define the boundary. However, since a boundary wire can be difficult to install in some areas, other strategies may be employed in some cases. For example, global positioning system (GPS), dead reckoning, local positioning beacons, physical boundaries or even visual fixing relative to various structural markers may alternatively be employed to locate and retain the robotic vehicle within the boundary. A robotic vehicle (e.g., a robotic deicer) may therefore be provided that can operate and stay within boundaries that can be defined by any of a number of different ways. Moreover, the robotic vehicle may be intelligent enough to avoid (and possibly even classify) objects it encounters by employing contactless sensors. Yet further, in some cases, the robotic vehicle may be configured to learn boundary locations, or sub-locations, based on temporary or permanent indicia. The robotic vehicle may then also be cognizant of its position within the boundary, including areas already covered (or treated) and areas still left to be covered (or treated). By enabling the robotic vehicle to accurately determine its position and experience its surroundings in a more advanced way, the robotic vehicle may experience greatly expanded capabilities with respect to the performance of functions of the robotic vehicle inside the bounded area. For example, the robotic vehicle may accurately apply deicing solution with greater precision both in terms of the rate or density of coverage, and with respect to matching application of deicing solution more accurately to the boundaries of the area being treated.

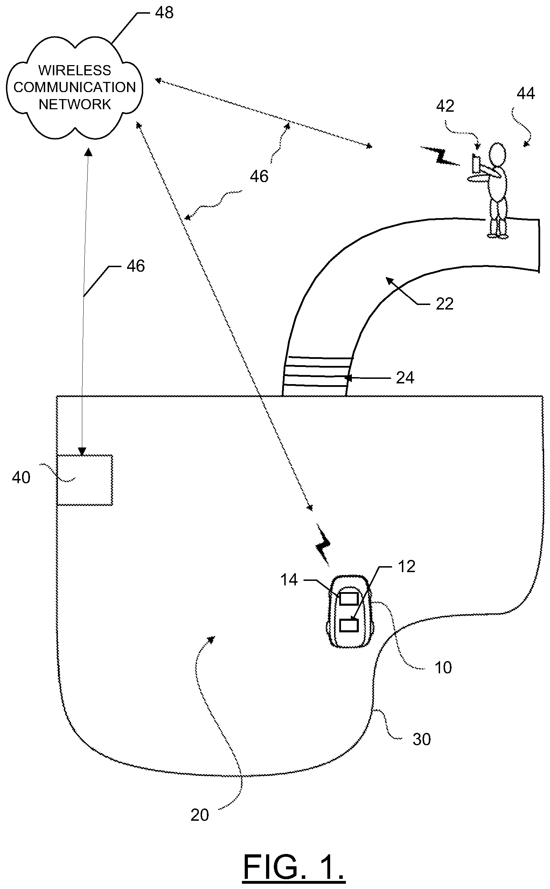

FIG. 1 illustrates an example operating environment for a robotic vehicle 10 that may be employed as a deicing robot in connection with an example embodiment. However, it should be appreciated that example embodiments may be employed on numerous other robotic vehicles, so the robotic vehicle 10 should be recognized as merely one example of such a vehicle. The robotic vehicle 10 may operate to apply a deicing solution on a service area 20 (i.e., a parking lot, walkway or other surface) enclosed by a boundary 30. The boundary 30 may be defined using one or more physical boundaries (e.g., a fence, wall, curb, boundary wire and/or the like), or programmed location based boundaries or combinations thereof. When the boundary 30 is detected, by any suitable means, the robotic vehicle 10 may be informed so that the robotic vehicle 10 can operate in a manner that prevents the robotic vehicle 10 from leaving or moving outside the boundary 30.

In the example of FIG. 1, the service area 20 includes a main portion, which may be a parking lot and a walkway 22. The walkway 22 is separated from the main portion of the service area 20 by a transition region 24, which in this case happens to be stairs. The stairs may not be traversable by the robotic vehicle 10 and may define an impassible region between the driving surface of the main portion, and the walking surface of the walkway 22. However, in other cases, the transition region 24 could be passable (e.g., forming a ramp or other surface). Notably, the walkway 22 has a limited (or much smaller) width relative to the main portion of the service area 20. Thus, the main portion of the service area 20 may be treated or covered via a plurality of overlapping passes made by the robotic vehicle 10, whereas the walkway 22 may be treated or covered with a single pass or two passes dependent upon the width of the coverage area defined by the robotic vehicle 10. In this regard, the robotic vehicle 10 may have a lateral coverage area (e.g., spray width) that is defined by the characteristics of the spray nozzle (or nozzles) used by the robotic vehicle 10. By knowing the lateral coverage area of the robotic vehicle 10, the number of passes needed to cover the main portion of the service area 20 and/or the walkway 22 may be determined.

The robotic vehicle 10 may be controlled, at least in part, via control circuitry 12 located onboard relative to the application of deicing fluid from a storage tank 14. The control circuitry 12 may include, among other things, a positioning module and a sensor module, which will be described in greater detail below. Accordingly, the robotic vehicle 10 may utilize the control circuitry 12 to define a path (or series of paths) for coverage of the service area 20 in terms of performing a task over specified portions or the entire service area 20. In this regard, the positioning module may be used to guide the robotic vehicle 10 over the service area 20 and to ensure that full coverage (of at least predetermined portions of the service area 20) is obtained, while the sensor module may detect objects and/or gather data regarding the surroundings of the robotic vehicle 10 while the service area 20 is traversed.

If a sensor module is employed, the sensor module may include a sensors related to positional determination (e.g., a GPS receiver, an accelerometer, a camera, a radar transmitter/detector, an ultrasonic sensor, a laser scanner and/or the like). Thus, for example, positional determinations may be made using GPS, inertial navigation, optical flow, radio navigation, laser or light detection and ranging (LIDAR) visual location (e.g., VSLAM) and/or other positioning techniques or combinations thereof. Accordingly, the sensors may be used, at least in part, for determining the location of the robotic vehicle 10 relative to boundaries or other points of interest (e.g., a starting point or other key features) of the service area 20, or determining a position history or track of the robotic vehicle 10 over time. The sensors may also detect collision, tipping over, or various fault conditions. In some cases, the sensors may also or alternatively collect data regarding various measurable parameters (e.g., moisture, temperature, soil conditions, etc.) associated with particular locations on the service area 20.

In an example embodiment, the robotic vehicle 10 may be battery powered via one or more rechargeable batteries. Accordingly, the robotic vehicle 10 may be configured to return to a charging station 40 that may be located at some position on or adjacent to the service area 20 in order to recharge the batteries. The batteries may power a drive system and a spray control system of the robotic vehicle 10. However, the control circuitry 12 of the robotic vehicle 10 may selectively control the application of power or other control signals to the drive system and/or the spray control system to direct the operation of the drive system and/or spray control system. Accordingly, movement of the robotic vehicle 10 over the service area 20 may be controlled by the control circuitry 12 in a manner that enables the robotic vehicle 10 to systematically traverse the service area 20 while operating the spray control system to apply deicing fluid stored in the robotic vehicle 10 over the service area 20. In cases where the robotic vehicle 10 is not a deicer, the control circuitry 12 may be configured to control another functional or working assembly that may replace the spray control system.

In some embodiments, the control circuitry 12 and/or a communication node at the charging station 40 may be configured to communicate wirelessly with an electronic device 42 (e.g., a personal computer, a cloud based computer, server, mobile telephone, PDA, tablet, smart phone, and/or the like) of a remote operator 44 (or user) via wireless links 46 associated with a wireless communication network 48. The wireless communication network 48 may provide operable coupling between the remote operator 44 and the robotic vehicle 10 via the electronic device 42, which may act as a remote control device for the robotic vehicle 10 or may receive data indicative or related to the operation of the robotic vehicle 10 to enable consumption of information or provision of instructions for the robotic vehicle 10 or charging station 40 at the electronic device 42. However, it should be appreciated that the wireless communication network 48 may include additional or internal components that facilitate the communication links and protocols employed. Thus, some portions of the wireless communication network 48 may employ additional components and connections that may be wired and/or wireless. For example, the charging station 40 may have a wired connection to a computer or server that is connected to the wireless communication network 48, which may then wirelessly connect to the electronic device 42. As another example, the robotic vehicle 10 may wirelessly connect to the wireless communication network 48 (directly or indirectly) and a wired connection may be established between one or more servers of the wireless communication network 48 and a PC of the remote operator 44. In some embodiments, the wireless communication network 48 may be a data network, such as a local area network (LAN), a metropolitan area network (MAN), a wide area network (WAN) (e.g., the Internet), and/or the like, which may couple the robotic vehicle 10 to devices such as processing elements (e.g., personal computers, server computers or the like) or databases. Accordingly, communication between the wireless communication network 48 and the devices or databases (e.g., servers, electronic device 42, control circuitry 12) may be accomplished by either wireline or wireless communication mechanisms and corresponding protocols.

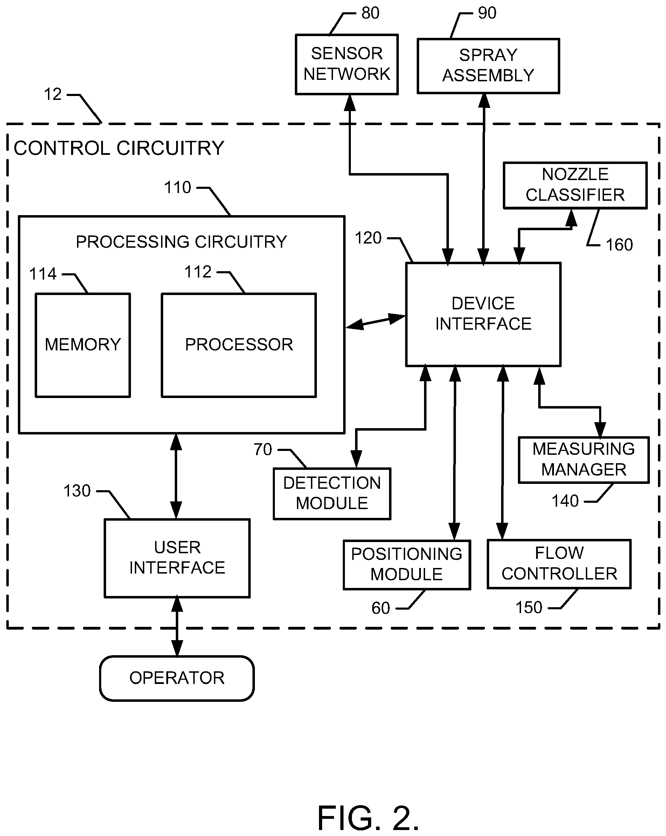

FIG. 2 illustrates a block diagram of various components of the control circuitry 12 to illustrate some of the components that enable or enhance the functional performance of the robotic vehicle 10 and to facilitate description of an example embodiment. In some example embodiments, the control circuitry 12 may include or otherwise be in communication with a vehicle positioning module 60, and a detection module 70 (e.g., for detecting objects, borders and/or the like). The vehicle positioning module 60 and the detection module 70 may work together to give the robotic vehicle 10 a comprehensive understanding of its environment, and enable it to be operated autonomously with or without boundary wires.

In an example embodiment, the vehicle positioning module 60 and the detection module 70 may be part of a sensor network 80 of the robotic vehicle 10. However, in some cases, the vehicle positioning module 60 and the detection module 70 may be separate from, but in communication with, the sensor network 80 to facilitate operation of each respective module. The control circuitry 12 may further include or otherwise be in communication with a measuring manager 140, a flow controller 150 and a nozzle classifier 160, as described in greater detail below.

In some examples, the sensor network 80 may include a camera other imaging device, a moisture detector, and/or a thermometer or other ambient or surface temperature sensor. The camera may capture or record image data in the visible light spectrum or in other portions of the electromagnetic spectrum (e.g., IR camera). The robotic vehicle 10 may also include one or more functional components of a spray assembly 90 (described in greater detail below), which may be controlled by the control circuitry 12 or otherwise be operated in connection with the operation of the robotic vehicle 10. Although not shown in FIG. 2, other functional components of the robotic vehicle 10 may include a wheel assembly (or other mobility assembly components), a fluid tank (which may be part of the spray assembly), and/or other such devices.

The control circuitry 12 may include processing circuitry 110 that may be configured to perform data processing or control function execution and/or other processing and management services according to an example embodiment of the present invention. In some embodiments, the processing circuitry 110 may be embodied as a chip or chip set. In other words, the processing circuitry 110 may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The processing circuitry 110 may therefore, in some cases, be configured to implement an embodiment of the present invention on a single chip or as a single "system on a chip." As such, in some cases, a chip or chipset may constitute means for performing one or more operations for providing the functionalities described herein.

In an example embodiment, the processing circuitry 110 may include one or more instances of a processor 112 and memory 114 that may be in communication with or otherwise control a device interface 120 and, in some cases, a user interface 130. As such, the processing circuitry 110 may be embodied as a circuit chip (e.g., an integrated circuit chip) configured (e.g., with hardware, software or a combination of hardware and software) to perform operations described herein. However, in some embodiments, the processing circuitry 110 may be embodied as a portion of an on-board computer. In some embodiments, the processing circuitry 110 may communicate with electronic components and/or sensors of the robotic vehicle 10 via a single data bus. As such, the data bus may connect to a plurality or all of the switching components, sensory components and/or other electrically controlled components of the robotic vehicle 10. However, it should be noted that the processing circuitry 110 may be located at other locations in the system, or may even be distributed in some cases. Thus, for example, in some cases, the processing circuitry 110 and corresponding functions described herein may be located at a remote server (or the electronic device 42), and some of the calculations or determinations described herein may be performed thereat. Communication via the wireless communication network 48 may then enable functions involving remote calculations or determinations to be performed locally at the charging station 40 or the robotic vehicle 10.

The processor 112 may be embodied in a number of different ways. For example, the processor 112 may be embodied as various processing means such as one or more of a microprocessor or other processing element, a coprocessor, a controller or various other computing or processing devices including integrated circuits such as, for example, an ASIC (application specific integrated circuit), an FPGA (field programmable gate array), or the like. In an example embodiment, the processor 112 may be configured to execute instructions stored in the memory 114 or otherwise accessible to the processor 112. As such, whether configured by hardware or by a combination of hardware and software, the processor 112 may represent an entity (e.g., physically embodied in circuitry - in the form of processing circuitry 110) capable of performing operations according to embodiments of the present invention while configured accordingly. Thus, for example, when the processor 112 is embodied as an ASIC, FPGA or the like, the processor 112 may be specifically configured hardware for conducting the operations described herein. Alternatively, as another example, when the processor 112 is embodied as an executor of software instructions, the instructions may specifically configure the processor 112 to perform the operations described herein.

In an example embodiment, the processor 112 (or the processing circuitry 110) may be embodied as, include or otherwise control the vehicle positioning module 60, the detection module 70, the measuring manager 140, the flow controller 150, the nozzle classifier 160 and/or the spray assembly 90. As such, in some embodiments, the processor 112 (or the processing circuitry 110) may be said to cause each of the operations described in connection with the vehicle positioning module 60, the detection module 70, the measuring manager 140, the flow controller 150, the nozzle classifier 160 and/or the spray assembly 90 by directing the vehicle positioning module 60, the detection module 70, the measuring manager 140, the flow controller 150, the nozzle classifier 160 and/or the spray assembly 90, respectively, to undertake the corresponding functionalities responsive to execution of instructions or algorithms configuring the processor 112 (or processing circuitry 110) accordingly. These instructions or algorithms may configure the processing circuitry 110, and thereby also the robotic vehicle 10, into a tool for driving the corresponding physical components for performing corresponding functions in the physical world in accordance with the instructions provided.

In an exemplary embodiment, the memory 114 may include one or more non-transitory memory devices such as, for example, volatile and/or non-volatile memory that may be either fixed or removable. The memory 114 may be configured to store information, data, applications, instructions or the like for enabling the vehicle positioning module 60, the detection module 70, the measuring manager 140, the flow controller 150, the nozzle classifier 160 and/or the spray assembly 90 to carry out various functions in accordance with exemplary embodiments of the present invention. For example, the memory 114 could be configured to buffer input data for processing by the processor 112. Additionally or alternatively, the memory 114 could be configured to store instructions for execution by the processor 112. As yet another alternative, the memory 114 may include one or more databases that may store a variety of data sets responsive to input from various sensors or components of the robotic vehicle 10. Among the contents of the memory 114, applications may be stored for execution by the processor 112 in order to carry out the functionality associated with each respective application.

The applications may include applications for controlling the robotic vehicle 10 relative to various operations including determining an accurate position of the robotic vehicle 10 (e.g., using one or more sensors of the vehicle positioning module 60). Alternatively or additionally, the applications may include applications for controlling the robotic vehicle 10 relative to various operations including determining the existence and/or position of obstacles (e.g., static or dynamic) and borders relative to which the robotic vehicle 10 must navigate (e.g., using one or more sensors of the detection module 70). Alternatively or additionally, the applications may include applications for controlling the robotic vehicle 10 relative to various operations including application of deicing fluid over the service area 20 during operation of the robotic vehicle 10 relative to the service area 20.

The user interface 130 (if implemented) may be in communication with the processing circuitry 110 to receive an indication of a user input at the user interface 130 and/or to provide an audible, visual, mechanical or other output to the user. As such, the user interface 130 may include, for example, a display, one or more buttons or keys (e.g., function buttons), and/or other input/output mechanisms (e.g., microphone, speakers, cursor, joystick, lights and/or the like).

The device interface 120 may include one or more interface mechanisms for enabling communication with other devices either locally or remotely. In some cases, the device interface 120 may be any means such as a device or circuitry embodied in either hardware, or a combination of hardware and software that is configured to receive and/or transmit data from/to sensors or other components in communication with the processing circuitry 110. In some example embodiments, the device interface 120 may provide interfaces for communication of data to/from the control circuitry 12, the vehicle positioning module 60, the detection module 70, the measuring manager 140, the flow controller 150, the nozzle classifier 160, the sensor network 80, the spray assembly 90 and/or other functional components via wired or wireless communication interfaces in a real-time manner, as a data package downloaded after data gathering or in one or more burst transmission of any kind.

Each of the vehicle positioning module 60, the detection module 70, the measuring manager 140, the flow controller 150, and the nozzle classifier 160 may be any means such as a device or circuitry embodied in either hardware, or a combination of hardware and software that is configured to perform the corresponding functions described herein. Thus, the modules may include hardware and/or instructions for execution on hardware (e.g., embedded processing circuitry) that is part of the control circuitry 12 of the robotic vehicle 10. The modules may share some parts of the hardware and/or instructions that form each module, or they may be distinctly formed. As such, the modules and components thereof are not necessarily intended to be mutually exclusive relative to each other from a compositional perspective.

The vehicle positioning module 60 (or "positioning module") may be configured to utilize one or more sensors (e.g., of the sensor network 80) to determine a location of the robotic vehicle 10 and direct continued motion of the robotic vehicle 10 to achieve appropriate coverage of the service area 20. As such, the robotic vehicle 10 (or more specifically, the control circuitry 12) may use the location information to determine a vehicle track and/or provide full coverage of the service area 20 to ensure the entire parcel is deiced (or otherwise serviced). The vehicle positioning module 60 may therefore be configured to direct movement of the robotic vehicle 10, including the speed and direction of the robotic vehicle 10. The vehicle positioning module 60 may also employ such sensors to attempt to determine an accurate current location of the robotic vehicle 10 on the service area 20. The vehicle positioning module 60 may further enable the control circuitry 12 to determine an amount of deicing fluid applied to each portion of the service area 20 as described in greater detail below (e.g., via the flow controller 150).

Various sensors of sensor network 80 of the robotic vehicle 10 may be included as a portion of, or otherwise communicate with, the vehicle positioning module 60 to, for example, determine vehicle speed/direction, vehicle location, vehicle orientation and/or the like. Sensors may also be used to determine motor run time, machine work time, and other operational parameters. In some embodiments, positioning and/or orientation sensors (e.g., GPS receiver, real time kinematic (RTK) - GPS receiver, GLONASS, Galileo, GNSS, and/or the like and/or an accelerometer) may be included to monitor, display and/or record data regarding vehicle position and/or orientation as part of the vehicle positioning module 60. The sensor network 80 may also include devices for measuring ambient temperature, surface temperature, moisture, nozzle differential pressure, pump pressure, flow rate, and other values pertinent to the operation of the robotic vehicle 10.

In an example embodiment, the detection module 70 may be configured to utilize one or more sensors (e.g., of the sensor network 80) to detect objects and/or boundaries that are located in the area around the robotic vehicle 10 to enable the robotic vehicle 10 to identify the objects or boundaries with or without physically contacting them. Thus, the detection module 70 may enable object avoidance as well as allow the robotic vehicle 10 to avoid contact with boundaries, buildings, fences, and/or the like while covering the service area 20. As such, the robotic vehicle 10 (or more specifically, the control circuitry 12) may object/boundary detection information to alter a track of the robotic vehicle 10 and/or report impediments to providing full coverage of the service area 20. The detection module 70 may therefore be configured to detect static (i.e., fixed or permanent) and/or dynamic (i.e., temporary or moving) objects in the vicinity of the robotic vehicle 10. In some cases, the detection module 70 may be further configured to classify or identify the objects detected (e.g., by type, as known or unknown, as static or dynamic objects, as specific objects, and/or the like). Moreover, in some cases, the detection module 70 may interact with the vehicle positioning module 60 to utilize one or more objects to facilitate positioning or boundary definition for the robotic vehicle 10.

Various sensors of sensor network 80 of the robotic vehicle 10 may be included as a portion of, or otherwise communicate with, the detection module 70 to, for example, determine the existence of objects, determine range to objects, determine direction to objects, classify objects, and/or the like. The detection module 70 may also or alternatively enable the robotic vehicle 10 to determine precipitation conditions such as the existence of rain, snow, sleet or ice based on temperature and/or moisture detection sensors.

The measuring manager 140 may be configured to receive, process and/or communicate various values measured by the sensor network 80 such as, for example, vehicle speed/direction, vehicle location, vehicle orientation, ambient temperature, surface temperature, moisture, differential pressure, flow and/or other measurements made by the robotic vehicle 10. Moreover, in some example embodiments, the measuring manager 140 may store measurements made (e.g., in the memory 114) in order to enable historical analysis of information stored and/or to enable trends to be determined and recommendations to be performed by the nozzle classifier 160. In this regard, for example, the measuring manager 140 may be configured to store information on flow rates (directly or indirectly measured) associated with individual nozzles to determine when flow rates are changing or have changed by predetermined amounts so that the nozzles can be replaced or otherwise serviced. The measurements may also be provided to the flow controller 150 to enable the flow controller 150 to determine how many passes are needed to achieve full coverage of the service area 20 based on the flow rates, the shape and extent of the service area 20 and the characteristics of the flow generated by nozzles being used.

The flow controller 150 may be configured to determine the flow rate of application of deicing solution so that the density of application of the deicing solution can be known and/or controlled based on the specific nozzles in use at any given time. Thus, the flow controller 150 may interface with the nozzle classifier 160 to learn which nozzles are in use. The nozzle classifier 160 may detect which nozzles (e.g., by type or type classification based on different characteristics being associated with each different type or type classification) are in use, and inform the flow controller 150 of the same. The flow controller 150 may determine (e.g., based on a lookup table for each nozzle type) flow rates or characteristics associated with each nozzle type. The flow controller 150 may then be used to calculate a rate of application of the deicing solution or solution density that is desirable based on weather conditions and/or weather forecasts, and the number of passes and pattern for applying such passes to achieve the desired rate of application or solution density. The application rate or solution density could be consistent over the entire service area 20, or may change for different parts of the service area 20 (e.g., the walkway 22 or the transition region 24). In an example embodiment, the flow controller 150 may include executable applications, tables or equations that configure the flow controller 150 to determine, for provided weather forecasts or estimates of temperature, precipitation and corresponding time periods for which the temperature and precipitation will be applicable, the density of deicing solution that should be applied and/or timing of such application. The flow controller 150 may also be configured to interface with various components of the robotic vehicle 10 as discussed in greater detail below in order to control the flow rate or density of application of the deicing solution while the robotic vehicle 10 traverses the service area 20.

As noted above, the nozzle classifier 160 may be configured to monitor the spray assembly 90 to determine which nozzle or nozzles are being employed in the spray assembly 90. Based on determining which nozzles are in use, and further based on an understanding of the characteristics of each nozzle (e.g., flow rate, spray pattern, etc.) by the nozzle classifier, the flow controller 150 can ensure that deicing solution waste does not occur, and that underspraying also does not occur. In this regard, with an accurate understanding of flow rates and spray patterns as enabled by the nozzle classifier 160, accurate application of the deicing solution to achieve deicing goals may be achieved. In an example embodiment, the nozzle classifier 160 may be configured to classify a particular nozzle being used in the spray assembly 90 either through electronic classification or through classification based on measured flow rates.

For classification based on measured flow rates, the measuring manager 140 may achieve accurate measurement of flow rates achieved through a given nozzle. Then, based on the flow rate measured (e.g., and tables stored in the memory 114), the nozzle classifier 160 may determine the type of nozzle installed in the spray assembly 90 and inform the flow controller 150.

For electronic classification, the nozzle classifier 160 may include electronic nozzle interrogation means for determining the type of nozzle (or nozzles) installed in the spray assembly 90. As an example, each nozzle may include an identifier (e.g., a radio frequency identification (RFID) chip or other near field communication (NFC) related methods) that can be read by a reader (or other sensing platform) of the nozzle classifier 160.

Regardless of how the nozzle classifier 160 determines the nozzle type employed, the nozzle classifier 160 may, when such type is determined, inform the flow controller 150 to enable accurate planning and control of deicing solution. As such, the type of nozzles (distinct based on their respective nozzle characteristics (e.g., flow rate and/or spray pattern)) may be automatically determined so that the flow controller 150 can understand which nozzles are in use and adjust pump pressures or vehicle speeds to achieve the deicing solution density desired for application for each respective area that is to be serviced.

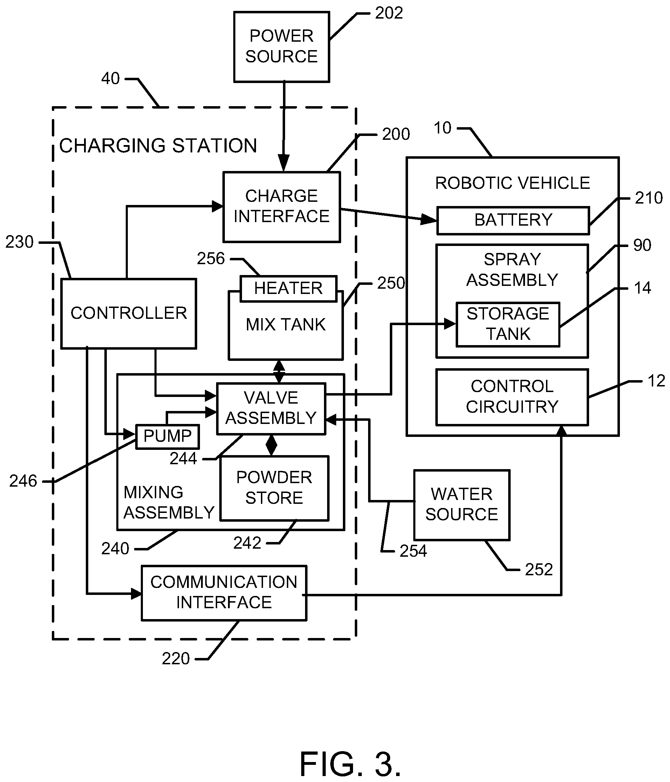

FIG. 3 is a block diagram of the charging station 40 of an example embodiment. The charging station 40 may include a charge interface 200, which includes structures and electronic components to interface with a power source 202 and a battery 210 of the robotic vehicle 10 in order to charge the battery 210 from the power source 202. The charging station 40 and the charge interface 200 may be arranged to enable the robotic vehicle 10 to drive into or proximate to the charging station 40 and engage with the charge interface 200 when parked in or at the charging station 40. For example, the robotic vehicle 10 may be guided or otherwise enter into proximity with the charging station 40 in a manner that engages charging contacts on the charge interface 200 and the robotic vehicle 10 to enable power from the power source 202 to be used to charge the battery 210 of the robotic vehicle 10. However, wireless charging of the battery 210 is also possible in some example embodiments where the charge interface 200 is configured to wireless charging.

In some cases, the charging station 40 may also be capable of communication (wired or wireless) with the robotic vehicle 10 to exchange information with and/or provide instructions to the robotic vehicle 10. In this regard, for example, the charging station 40 may include a communication interface 220 that is capable of wireless or wired communication with the control circuitry 12. The communication may include the provision of instructions to the robotic vehicle 10 and/or extraction of data from the robotic vehicle 10. In some cases, the data extracted may include sensor data obtained by the sensor network 80, and such data may be communicated to the electronic device 42 via the wireless communication network 48 (via wireless links 46).

In an example embodiment, the charging station 40 may include a controller 230. The controller 230 may include processing circuitry, which may be similar in form or structure (or at least functional capability) to the processing circuitry 110 described above in connection with the description of FIG. 2. Thus, the details of the structure and function of the controller 230 will not be repeated. The controller 230 may be configured to control communications associated with the communication interface 220 and/or control operations of the charge interface 200. However, in some cases, the charging station 40 may not include the communication interface 220 and/or the controller 230. In such examples, the corresponding components of the charging station 40 may be operated manually or locally by the operator.

In an example embodiment, the charging station 40 may also be configured to provide the deicing solution to the robotic vehicle 10. Thus, for example, the deicing solution may be transferred to the storage tank 14 of the robotic vehicle 10 while the robotic vehicle 10 is charging (or at least while the robotic vehicle 10 is operably coupled to the charging station 40). The transfer of deicing solution to the storage tank 14 may therefore happen simultaneous with charging, or sequentially before or after charging of the battery 210. A mixing assembly 240 may be included at the charging station 40 to enable mixing and creation of the deicing solution prior to provision of the deicing solution to the storage tank 14.

The mixing assembly 240 may include a mixing powder store 242, which may be a tank, container, or other holding apparatus in which a mixing powder (or simply "powder") or other dry mixing material that mixes with water (or another liquid medium) to form the deicing solution in a mix tank 250. In an example embodiment water provision to the mix tank 250 may be controlled by a valve assembly 244 of the mixing assembly 240. The valve assembly 244 may include electronically (or manually) controlled valves that direct flow from a water source 252 into the mix tank 250. Alternatively or additionally, the valve assembly 244 may be used to control flow from the mix tank 250 to the storage tank 14 and/or within the mix tank 250.

In some examples, the water source 252 may be attached to the mix tank 250 or the valve assembly 244 via a hose connection 254. The hose connection 254 may be a common water hose, or may be heated to prevent freezing in cold temperatures. If not heated, the hose connection 254 may be manually attached for filling from the water source 252 and then disconnected thereafter in order to avoid freezing of water in the hose connection 254. The valve assembly 244 may include a fill alignment in which the valves of the valve assembly 244 are positioned to enable water to flow from the water source 252 (e.g., a spigot attached to a pressurized water supply) to the mix tank 250. In some cases, such flow may transition through the mixing powder store 242 to transfer the mixing powder therein into the mix tank 250. However, in other cases, the valve assembly 244 may include one or more valves that can be aligned to allow the mixing powder to fall into the mix tank 250 (e.g., via gravity). In still other cases, the operator may simply pour or add the mixing powder directly into the mix tank 250 so that no mixing powder store 242 is needed at all.

Alternatively or additionally, the valve assembly 244 may have a transfer alignment in which the valves of the valve assembly 244 are positioned to enable deicing solution to flow from the mix tank 250 to the storage tank 14. Flow may be driven by a pump 246 of the mixing assembly 240. As yet another alternative or addition, the valve assembly 244 may have a freshening or mixing alignment in which valves of the valve assembly 244 are positioned to enable deicing solution to flow internally in the mix tank 250. The mixing alignment may, in some cases, rely on the pump 246 of the mixing assembly 240 to provide motive force for moving deicing solution within the mix tank 250. The movement of deicing solution in the mixing alignment may ensure proper mixing of the mixing powder with water to form the deicing solution (or any other aqueous solution to be sprayed by the robotic vehicle 10). The movement of deicing solution may also prevent settling of the mixing powder, or otherwise prevent the mixing powder from coming out of solution, to keep the deicing solution properly mixed and ready for use. However, some powders or other materials used to form the aqueous solution may stay in solution well, and may not need continuous mixing to stay in solution. Yet another potential advantage of the movement of the deicing solution in the mixing alignment may be to prevent freezing of the deicing solution in very low temperatures. However, in some examples, a heater 256 may be provided at the mix tank 250 in order to heat the solution therein and prevent freezing.

As can be appreciated from the description above, the deicing solution may be prepared at the charging station 40 for transfer to the robotic vehicle 10 during charging of the battery 210 of the robotic vehicle 10. However, it may also be possible to arrange the charging station 40 to interface directly with the storage tank 14 while the robotic vehicle 10 is docked at the charging station 40. In such an example, the storage tank 14 may, while docked, be operably coupled to the valve assembly 244, pump 246, and/or mixing powder store 242 instead of the mix tank 250. Thus, for example, the storage tank 14 and mix tank 250 may effectively be the same component when the robotic vehicle 10 is docked.

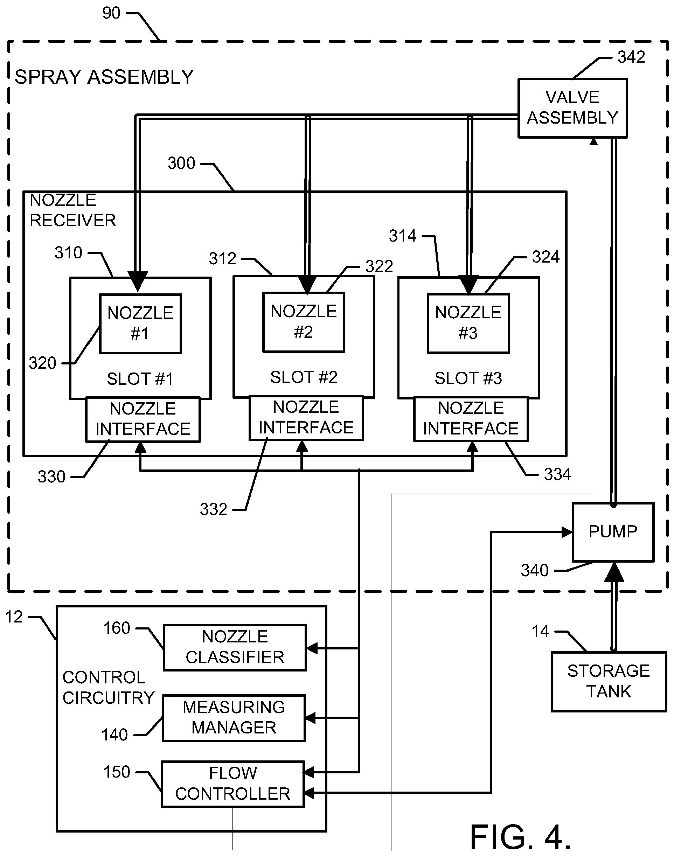

FIG. 4 illustrates a block diagram of components of the spray assembly 90 in greater detail. In this regard, the spray assembly 90 includes a nozzle receiver 300 having a first slot 310 inside which a first nozzle 320 is retained or received. The first slot 310 includes a first nozzle interface 330 including contacts, components and/or the like for enabling electrical interface with the first nozzle 320 for flow rate determinations and/or nozzle type classifications by the nozzle classifier 160. The spray assembly also includes a pump 340 configured to pump deicing solution from the storage tank 14 through the pump 340 and out the first nozzle 320 to be applied to the service area 20.

As shown in FIG. 4, the nozzle receiver 300 may be capable of supporting multiple nozzles in some cases. Thus, for example, the nozzle receiver 300 may include a second slot 312 and a third slot 314 inside which a second nozzle 322 and third nozzle 324, respectively, may be retained or received. The second slot 312 may also include a second nozzle interface 332 including contacts, components and/or the like for enabling electrical interface with the second nozzle 322 for flow rate determinations and/or nozzle type classifications by the nozzle classifier 160. The third slot 314 may also include a third nozzle interface 334 including contacts, components and/or the like for enabling electrical interface with the third nozzle 324 for flow rate determinations and/or nozzle type classifications by the nozzle classifier 160.

In an example embodiment, the first, second and third nozzle interfaces 330, 332 and 334 may each include a differential pressure detector configured to enable accurate flow rate determinations. For example, a differential pressure sensor may be disposed on either side of an orifice having a known diameter. In this regard, the differential pressure sensor may measure a difference in pressure across a restriction (e.g., a venturi contraction) formed in a corresponding nozzle and having a known diameter. Using Bernoulli's principal along with known user selected fluid properties, it may be possible to calculate the flow rate more accurately, and in such a way that accurate flow rate determinations may be made to enable the nozzle classifier 160 to use such flow rate measurements to classify the nozzle in each respective slot.

As an alternative or additionally, each nozzle may have a corresponding identification chip or marking (e.g., visual indicia) that uniquely identifies the nozzle by type. The first, second and third nozzle interfaces 330, 332 and 334 may each include a reader (e.g., an NFC or RFID reader, contact electrical resistor, or a camera) that is configured to read the chip or marking and provide such information to the nozzle classifier 160. The nozzle classifier 160 may then determine the nozzle type based on the interaction with the chip or marking, and the information received from the nozzle interfaces. As noted above, when the nozzle type is determined, the flow controller 150 may be made aware of the nozzle type of each respective one of the first, second and third nozzles 320, 322 and 324. In an example embodiment, the flow controller 150 may be configured to control the pump 340 and/or the speed of the robotic vehicle 10 in order to control the application rate of the deicing solution and therefore the density of the deicing solution applied to the service area 20 based on knowing the nozzles employed.

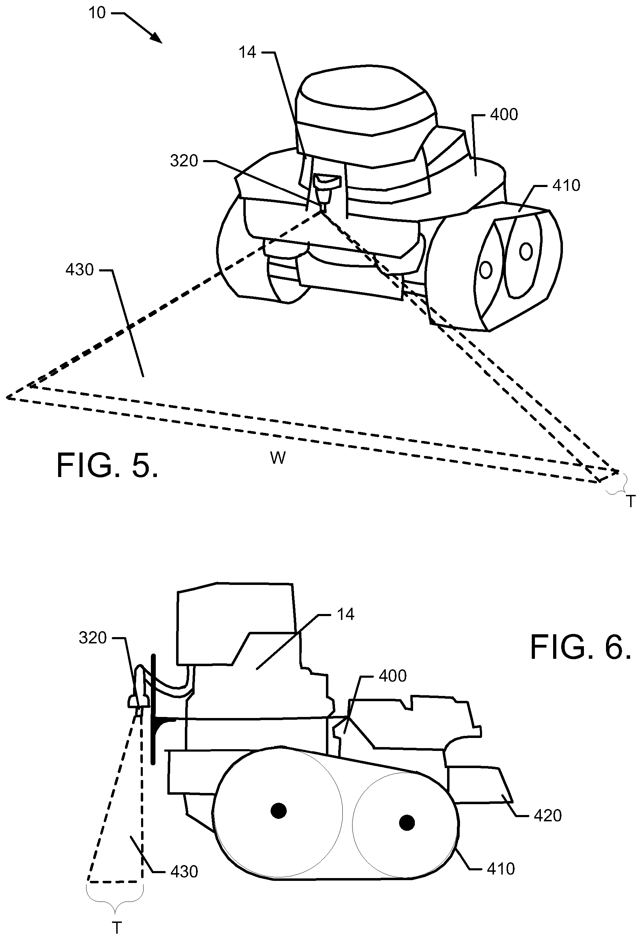

FIG. 5 illustrates a perspective view of the robotic vehicle 10 in accordance with an example embodiment, and FIG. 6 illustrates a side view of the robotic vehicle 10. As shown in FIGS. 5 and 6, the robotic vehicle 10 may include a chassis 400 supported by a mobility assembly 410. In this example, the mobility assembly 410 includes continuous tracks. However, other means of propulsion may be employed in alternative embodiments (e.g., wheels). The robotic vehicle 10 may include a charging interface 420 disposed at one end thereof (e.g., a front end) and the nozzle 320 may be disposed at another end thereof (e.g., a rear end). The charging interface 420 may include one or more contacts that come into slidable contact with the charge interface 200 of the charging station 40 when the robotic vehicle 10 docks in the charging station 40.

FIGS. 5 and 6 illustrate a spray pattern 430 that may result from expelling the deicing solution from the nozzle 320. The spray pattern 430 may have a width (W) that is measured transversely with respect to the longitudinal centerline of the robotic vehicle 10 and a thickness (T) that is measured in the same direction as the longitudinal centerline of the robotic vehicle 10. As shown in FIG. 5, the width (W) is substantially larger than the thickness (T). The spray pattern 430 may have a general shape determined by the first nozzle 320 and the amount of pressure generated by the pump 340, which is a rectangular shape when projected onto a surface over which the robotic vehicle 10 transits in this example. As can be appreciated from the descriptions above, by knowing the flow rate of deicing solution through the first nozzle 320, and further knowing the speed of the robotic vehicle 10 over the service area 20, a density or amount of deicing solution applied to the overall surface of the service area 20 may likewise be known. Moreover, the density or amount of deicing solution applied can also be controlled by controlling one or both of the pressure of the pump 340 and the speed of movement of the robotic vehicle 10.

As noted above, the pressure generated by the pump 340 may dictate the shape (and therefore the width (W) and/or the thickness (T) of the spray pattern 430. Accordingly, the flow controller 150 may be configured to select a pump pressure based on location within the service area 20 to achieve desired spray pattern characteristics. As an example, to minimize the number of passes it takes to cover the main portion of the service area 20, a high pump pressure may be selected. However, for the walkway 22, a pump pressure may be selected to achieve the most efficient and/or accurate coverage of the walkway 22. Thus, for example, if the width (W) of the spray pattern 430 can range from 2 feet to 4 feet, and the walkway 22 has a width of 4 feet, the flow controller 150 may select a maximum pump pressure to achieve a 4 foot width (W) for the spray pattern 430 to cover the walkway accurately with a single pass. However, if the walkway 22 has a width of 6 feet, the flow controller 150 may strategically select a medium pump pressure to achieve a 3 foot width (W) for the spray pattern 430 to cover the walkway accurately with exactly two passes.

The measuring manager 140 may gather information associated with (and therefore also determine) the flow rate. The measuring manager 140 may also gather information associated with the speed of the robotic vehicle 10. The measuring manager 140 may provide such information to the flow controller 150 to enable the flow controller 150 to determine instructions to either the pump 340 or the positioning module 60 (or both) to provide control over the density of the application of the deicing solution by controlling pressure and/or vehicle speed.

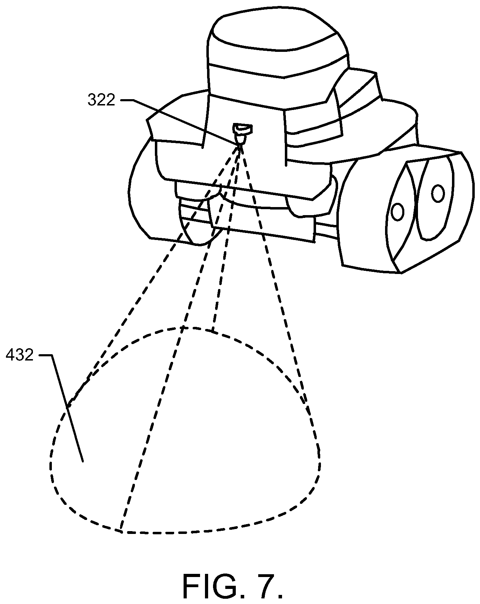

In an example embodiment, the first nozzle 320 may have known characteristics in terms of the flow rates and shape, width, thickness, etc., of the spray pattern 430. Meanwhile, the first nozzle 320 may be replaced with the second nozzle 322 shown in FIG. 7, and a different spray pattern 432 may result. As noted above, the flow controller 150 may be aware of the different characteristics associated with the spray patterns 430 and 432, respectively, to adjust calculations for pump pressure and/or vehicle speed accordingly. Numerous other nozzle types and combinations may be employed in other example embodiments, and corresponding different coverage strategies may be employed by the flow controller 150 to achieve coverage of the service area 20 based on knowledge and control of the different patterns that are achievable by the robotic vehicle.

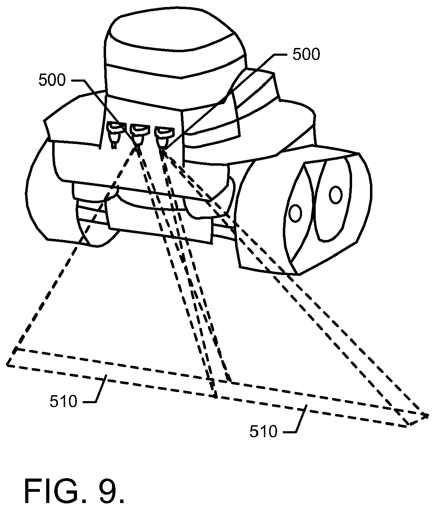

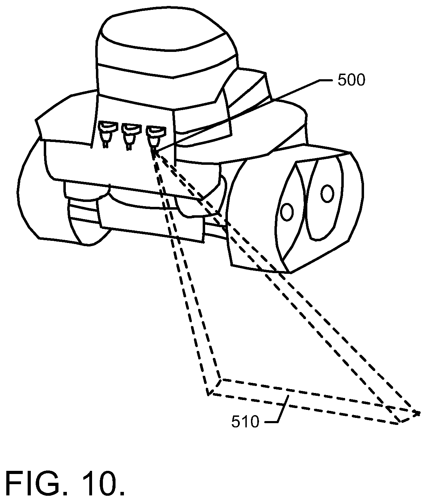

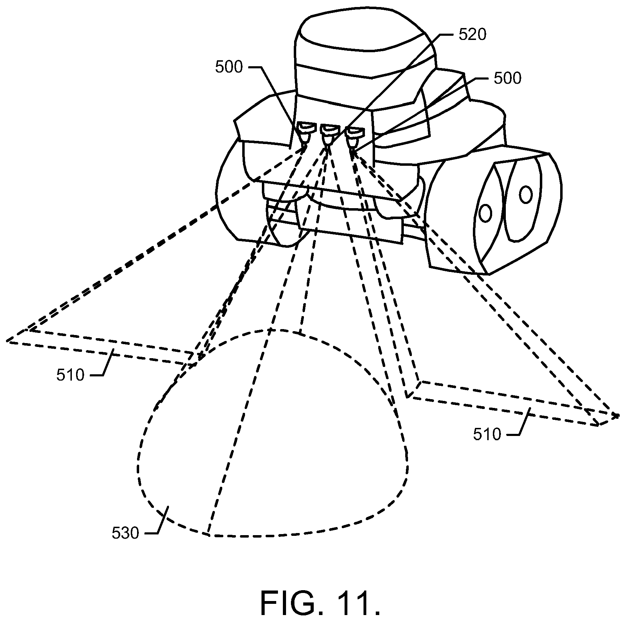

As an example, FIG. 9 illustrates an example in which the robotic vehicle 10 employs three nozzles 500 that each have similar spray patterns 510. The three spray patterns 510 combine to create a widest coverage option having width (W1). However, in certain areas, it may be desirable to reduce the width. Thus, for example, one of the nozzles 500 may not be operated as shown in FIG. 10 to reduce the composite coverage of the remaining nozzles 500 to width (W2). Notably, the coverage area is also slightly off to one side of the robotic vehicle 10, which may be advantageous in certain situations. FIG. 11 illustrates an example with an even smaller width (W3) of coverage by using only one of the nozzles 500, and the offset is more profound given that the nozzle 500 in use is aimed to only one side. However, it should be appreciated that any of the nozzles 500 could be selected at any time, and the patterns could be alternated or shifted as desired or required for individual areas or to avoid certain obstacles. Meanwhile, FIG. 11 illustrates an example in which different nozzles (500 and 520) are used at the same time to generate respective different spray patterns (510 and 530).

In an example embodiment, the control circuitry 12 may be configured to control a valve assembly 342 (see FIG. 4) to select provision of the aqueous solution to only selected ones of the first, second and third nozzles 320, 322 and 324. Determining which nozzle or nozzles to select may be made based on any of a number of factors (e.g., proximity of the robotic vehicle 10 to a boundary of the service area 20, type of solution being sprayed, general location in the service area 20, proximity to objects, programmed application density, etc.). The valve assembly 342 may cut off flow to any or all of the first, second and third nozzles 320, 322 and 324, or may restrict flow (thereby changing spray characteristics or pressure through the nozzles) as an alternative to changing flow characteristics by changing operation of the pump 340. Thus, for example, a spray pattern or width of the spray generated by one or all of the first, second and third nozzles 320, 322 and 324 may be altered based on operation of the valve assembly 342.

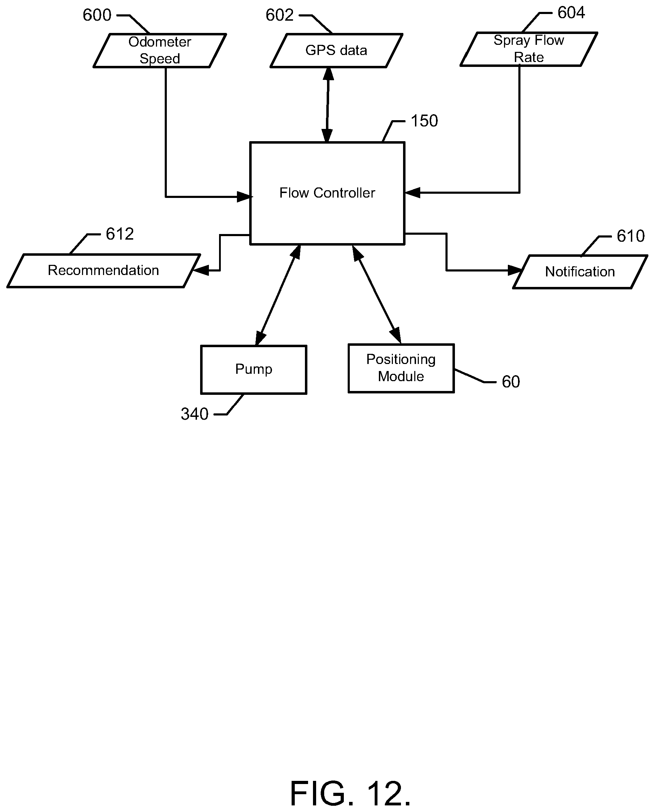

FIG. 12 illustrates a block diagram of information processing that may occur at the flow controller 150 in accordance with an example embodiment. In this regard, the flow controller 150 may receive speed information in the form of either or both of odometer speed 600 and GPS data 602 from the measuring manager 140. The GPS data 602 may also or alternatively include location information, so the flow controller 150 may have information indicative of the specific locations already covered, or presently being covered, by the robotic vehicle 10. The flow controller 150 may further be provided with spray flow rate 604 as determined by the measuring manager 140 and/or the nozzle classifier 160. By knowing the spray flow rate 604 for the nozzle or nozzles currently in use, the speed and location of the robotic vehicle 10 and the spray pattern for the nozzle or nozzles currently in use, the flow controller 150 can determine which portions of the service area 20 have already been covered with deicing solution, and by how much. Moreover, if programmed or instructed to apply a specific amount of deicing solution to certain locations or areas, the flow controller 150 may instruct the pump 340 and/or positioning module 60 to change speed or pump pressure to achieve the desired spray flow rate 604 and corresponding time spent at each location to achieve the corresponding specific amount of deicing solution at each location or area. Thereafter, the control circuitry 12 may further be configured to record an amount of the deicing solution applied at each location. The recorded data may also be time stamped so that a corresponding time of application for the amount of deicing solution applied at each location of the service area 20 can be known and demonstrated at a later time to prove that proper application of the deicing solution has been accomplished.

In an example embodiment, the flow controller 150 may be further configured to monitor usage of each one of the first, second and third nozzles 320, 322 and 324. For example, either the runtime or use time for each nozzle may be monitored and recorded, or the volume of flow through each nozzle may be monitored and recorded. Certain thresholds for use (e.g., runtime or volume of flow) may be defined in order to provide notifications 610 to the operator. The notifications 610 may indicate that it is time to service or replace a corresponding nozzle. Moreover, in some cases, the flow controller 150 may also, based on knowledge of a particular location being serviced or the type of fluid that is to be sprayed, provide recommendations 612 to the operator. The recommendations 612 may include listing of a recommended nozzle indicia corresponding to a type classification of a nozzle best suited to the current application based on a type of the aqueous solution that is provided in the storage tank.

Notably, instead of deicing solution, the same strategies and considerations discussed above could alternatively be employed for the spreading of other liquid solutions. Thus, for example, fertilizer, weed killer, pre-emergent, insecticide, water or other solutions could be sprayed using example embodiments. A simple substitution of the corresponding solution for the deicing solution described above may be employed to utilize the robotic vehicle 10 in each of various different useful solution spreading contexts. In some cases, different nozzles may be suited for use with different solutions or locations. In some examples, the control circuitry 12 may be configured to provide recommended nozzle types or spray patterns for corresponding different aqueous solutions that are to be applied by the robotic vehicle 10. Similarly, the control circuitry 12 may be configured to analyze a map of the service area 20 and recommend specific nozzle types for corresponding specific parts of the service area 20 to maximize the efficiency of the robotic vehicle 10 during application of a given aqueous solution. For example, the control circuitry 12 may be configured to determine (e.g., via the flow controller 150) which nozzles to use based on proximity of the robotic vehicle to a boundary of the service area 20, or based on an understanding of the proximity of the robotic vehicle 10 to other objects in the service area 20 to avoid spraying the objects, or avoid spraying outside the boundary. Thus, for example, the control circuitry 12 may be configured to determine a spray pattern or width of the spray generated by a given nozzle and select the given nozzle for use (or disuse) based on the spray pattern or width and its impact in the current location at which the robotic vehicle 10 is operating.

The robotic vehicle includes a chassis supporting a storage tank in which an aqueous solution is contained, a mobility assembly operably coupled to the chassis to provide mobility for the robotic vehicle about a service area, a positioning module configured to provide guidance for the robotic vehicle during transit of the robotic vehicle over the service area, a spray assembly and control circuitry. The spray assembly is operably coupled to the storage tank to spray the aqueous solution via a nozzle and a pump during the transit of the robotic vehicle over the service area. The control circuitry is operably coupled to the spray assembly. The control circuitry is configured to determine characteristics of the nozzle to control an amount of the aqueous solution applied to the service area based on the characteristics of the nozzle.

The robotic vehicle of some embodiments may include additional features, modifications, augmentations and/or the like to achieve further objectives or enhance performance of the vehicle. The additional features, modifications, augmentations and/or the like may be added in any combination with each other. Below is a list of various additional features, modifications, and augmentations that can each be added individually or in any combination with each other. For example, the spray assembly may include a nozzle receiver having a slot inside which the nozzle is received. The nozzle receiver may include a nozzle interface. In an example embodiment, the nozzle may include indicia indicating a type classification of the nozzle. The characteristics of the nozzle may be associated with the type classification and determined based on the indicia. In some cases, the nozzle interface may include an NFC reader and the indicia may be disposed at an NFC chip associated with the nozzle. In some cases, the indicia are determined through electrical characteristics of the nozzle via the nozzle interface (e.g., via a wired identification method using an electrical resistor). In an example embodiment, the nozzle receiver may include a plurality of slots to receive a corresponding plurality of nozzles, and each of the plurality of slots may have a corresponding instance of the nozzle interface configured to determine respective characteristics of each of the plurality of nozzles. In some cases, the control circuitry may be configured to control a valve assembly to select provision of the aqueous solution to only selected ones of the plurality of nozzles. **In** an example embodiment, the control circuitry may be configured to determine the selected ones of the plurality of nozzles based on proximity of the robotic vehicle to a boundary of the service area. **In** some cases, the control circuitry may be configured to determine a spray pattern or width of the spray generated by the nozzle based on operation of the valve assembly. **In** an example embodiment, the control circuitry may be configured to determine a spray pattern or width of the spray generated by the nozzle based on control of the pump. **In** some cases, one of the plurality of nozzles may include a first spray pattern, and another of the plurality of nozzles may include a second spray pattern that is different than the first spray pattern. **In** an example embodiment, the control circuitry is configured to monitor usage of the nozzle to recommend replacement of the nozzle based on the usage. In some cases, the control circuitry may be configured to monitor run hours of the nozzle to determine the usage. In an example embodiment, the control circuitry may be configured to monitor volume of fluid passed through the nozzle to determine the usage. In some cases, the aqueous solution may be a deicing solution. In an example embodiment, the control circuitry may be configured to record an amount of the deicing solution applied and a corresponding time of application for each location of the service area. In an example embodiment, the control circuitry may be configured to provide a recommended nozzle indicia corresponding to a type classification of the nozzle based on a type of the aqueous solution that is provided in the storage tank.

## Claims

1. A spray assembly (90) for a robotic vehicle (10), the spray assembly (90) comprising:
a pump (340) operably coupled to a storage tank (14) in which an aqueous solution is contained;
a nozzle (320, 322, 500) operably coupled to the storage tank (14) via the pump (340) to generate a spray pattern (430) for spraying the aqueous solution responsive to operation of the pump (340) as the robotic vehicle (10) transits a service area (20); and
a nozzle receiver (300) configured to receive the nozzle (320, 322, 500), and having a nozzle interface (330, 332, 334) that is operably couplable to a control circuitry (12) of the robotic vehicle (10),
wherein characteristics of the nozzle (320, 322, 500) are determinable by the control circuitry (12) to control an amount of the aqueous solution applied to the service area (20) based on the characteristics of the nozzle (320, 322, 500);
**characterized in that**
the nozzle (320, 322, 500) comprises indicia indicating a type classification of the nozzle (320, 322, 500), the characteristics of the nozzle (320, 322, 500) being associated with the type classification and determined based on the indicia,
**and in that**
the indicia are determinable, via the nozzle interface (330, 332, 334), wirelessly or through electrical characteristics of the nozzle.

2. The spray assembly (90) of claim 1, in which the indicia are determinable wirelessly, wherein the nozzle interface (330, 332, 334) comprises a near field communication (NFC) reader and the indicia are disposed at an NFC chip associated with the nozzle (320, 322, 500).

3. The spray assembly (90) of claim 1, wherein the nozzle receiver (300) comprises a slot (310, 312, 314) inside which the nozzle (320, 322, 500) is received.

4. The spray assembly (90) of claim 1, wherein the nozzle receiver (300) comprises a plurality of slots (310, 312, 314) to receive a corresponding plurality of nozzles (320, 322, 500), and
wherein each of the plurality of slots (310, 312, 314) has a corresponding instance of the nozzle interface (330, 332, 334) configured to determine respective characteristics of each of the plurality of nozzles (320, 322, 500).

5. A robotic vehicle (10) comprising:
a chassis (400) supporting a storage tank (14) in which an aqueous solution is contained;
a mobility assembly (410) operably coupled to the chassis (400) to provide mobility for the robotic vehicle (10) about a service area (20);
a positioning module (60) configured to provide guidance for the robotic vehicle (10) during transit of the robotic vehicle (10) over the service area (20);
a spray assembly (90) according to any of claims 1 to 4, the spray assembly (90) operably coupled to the storage tank (14) to spray the aqueous solution via a nozzle (320, 322, 500) and a pump (340) during the transit of the robotic vehicle (10) over the service area (20); and
control circuitry (12) operably coupled to the spray assembly (90), the control circuitry (12) being configured to determine the characteristics of the nozzle (320, 322, 500) to control an amount of the aqueous solution applied to the service area (20) based on the characteristics of the nozzle (320, 322, 500), wherein
the robotic vehicle is configured to determine the indica wirelessly or through the electrical characteristics of the nozzle (320, 322, 500) via the nozzle interface (330, 332, 334).

6. The robotic vehicle (10) of claim 5, comprising a spray assembly (90) according to claim 4, wherein the control circuitry (12) is configured to control a valve assembly (244, 342) to select provision of the aqueous solution to only selected ones of the plurality of nozzles (320, 322, 500).

7. The robotic vehicle (10) of claim 6, wherein the control circuitry (12) is configured to determine the selected ones of the plurality of nozzles (320, 322, 500) based on proximity of the robotic vehicle (10) to a boundary (30) of the service area (20).

8. The robotic vehicle (10) of claim 6, wherein the control circuitry (12) is configured to determine a spray pattern (430) or width (W) of the spray generated by the nozzle (320, 322, 500) based on operation of the valve assembly (244, 342);

9. The robotic vehicle (10) of claim 6, wherein the control circuitry (12) is configured to determine a spray pattern (430) or width (W) of the spray generated by the nozzle (320, 322, 500) based on control of the pump (340).

10. The robotic vehicle (10) of claim 5, comprising a spray assembly (90) according to claim 4, wherein one of the plurality of nozzles (320, 322, 500) comprises a first spray pattern (430), and another of the plurality of nozzles (320, 322, 500) comprises a second spray pattern (430) that is different than the first spray pattern (430).

11. The robotic vehicle (10) of claim 5, wherein the control circuitry (12) is configured to monitor usage of the nozzle (320, 322, 500) to recommend replacement of the nozzle (320, 322, 500) based on the usage.

12. The robotic vehicle (10) of claim 11, wherein the control circuitry (12) is configured to monitor run hours of the nozzle (320, 322, 500) to determine the usage.

13. The robotic vehicle of claim 11, wherein the control circuitry (12) is configured to monitor volume of fluid passed through the nozzle (320, 322, 500) to determine the usage.

14. The robotic vehicle (10) of claim 5, wherein the aqueous solution is a deicing solution;
optionally, wherein the control circuitry (12) is configured to record an amount of the deicing solution applied and a corresponding time of application for each location of the service area (20).

15. The robotic vehicle (10) of claim 5, wherein the control circuitry (12) is configured to provide a recommended nozzle indicia corresponding to a type classification of the nozzle (320, 322, 500) based on a type of the aqueous solution that is provided in the storage tank.

## Patentansprüche

1. Sprühvorrichtung (90) für ein Roboterfahrzeug (10), wobei die Sprühvorrichtung (90) umfasst:
eine Pumpe (340), die funktionsfähig mit einem Vorratstank (14) gekoppelt ist, in dem eine wässrige Lösung enthalten ist;
eine Düse (320, 322, 500), die über die Pumpe (340) funktionsfähig mit dem Vorratstank (14) gekoppelt ist, um ein Sprühmuster (430) zum Sprühen der wässrigen Lösung in Reaktion auf den Betrieb der Pumpe (340) zu erzeugen, wenn das Roboterfahrzeug (10) einen Servicebereich (20) durchfährt; und
einen Düsenempfänger (300), der so konfiguriert oder ausgebildet ist, dass er die Düse (320, 322, 500) aufnimmt, und der eine Düsenschnittstelle (330, 332, 334) aufweist, die funktionsfähig mit einer Steuerschaltung (12) des Roboterfahrzeugs (10) koppelbar ist,
wobei die Eigenschaften der Düse (320, 322, 500) durch die Steuerschaltung (12) bestimmbar sind, um eine Menge der auf den Servicebereich (20) aufgebrachten wässrigen Lösung basierend auf den Eigenschaften der Düse (320, 322, 500) zu steuern;
**dadurch gekennzeichnet, dass**
die Düse (320, 322, 500) Indizien umfasst, die eine Typklassifizierung der Düse (320, 322, 500) anzeigen, wobei die Eigenschaften der Düse (320, 322, 500) mit der Typklassifizierung verbunden sind und auf der Grundlage der Indizien bestimmt werden,
**und dadurch,** dass
die Indizien über die Düsenschnittstelle (330, 332, 334) drahtlos oder durch elektrische Eigenschaften der Düse bestimmbar sind.

2. Sprühvorrichtung (90) nach Anspruch 1, bei der die Indizien drahtlos ermittelbar sind, wobei die Düsenschnittstelle (330, 332, 334) ein Nahfeldkommunikationslesegerät (NFC) umfasst und die Indizien an einem mit der Düse (320, 322, 500) verbundenen NFC-Chip angeordnet sind.

3. Sprühvorrichtung (90) nach Anspruch 1, wobei der Düsenempfänger (300) einen Schlitz (310, 312, 314) aufweist, in dem die Düse (320, 322, 500) aufgenommen ist.

4. Sprühvorrichtung (90) nach Anspruch 1, wobei der Düsenempfänger (300) eine Vielzahl von Schlitzen (310, 312, 314) zur Aufnahme einer entsprechenden Vielzahl von Düsen (320, 322, 500) aufweist, und
wobei jeder der Vielzahl von Schlitzen (310, 312, 314) eine entsprechende Instanz der Düsenschnittstelle (330, 332, 334) aufweist, die so konfiguriert oder ausgebildet ist, dass sie die jeweiligen Eigenschaften jeder der Vielzahl von Düsen (320, 322, 500) bestimmt.

5. Roboterfahrzeug (10), umfassend:
ein Fahrgestell (400), das einen Vorratstank (14) trägt, in dem eine wässrige Lösung enthalten ist;
eine Mobilitätsbaugruppe (410), die funktionsfähig mit dem Fahrgestell (400) verbunden ist, um dem Roboterfahrzeug (10) Mobilität in einem Servicebereich (20) zu verleihen;
ein Positionierungsmodul (60), das so konfiguriert oder ausgebildet ist, dass es eine Führung für das Roboterfahrzeug (10) während der Fahrt des Roboterfahrzeugs (10) über den Servicebereich (20) bereitstellt;
eine Sprühvorrichtung (90) nach einem der Ansprüche 1 bis 4, wobei die Sprühvorrichtung (90) funktionsfähig mit dem Vorratstank (14) gekoppelt ist, um die wässrige Lösung über eine Düse (320, 322, 500) und eine Pumpe (340) während der Fahrt des Roboterfahrzeugs (10) über den Servicebereich (20) zu versprühen; und
eine Steuerschaltung (12), die funktionsfähig mit der Sprühvorrichtung (90) gekoppelt ist, wobei die Steuerschaltung (12) so konfiguriert oder ausgebildet ist, dass sie die Eigenschaften der Düse (320, 322, 500) bestimmt, um eine Menge der wässrigen Lösung zu steuern, die auf den Servicebereich (20) aufgebracht wird, basierend auf den Eigenschaften der Düse (320, 322, 500), wobei
das Roboterfahrzeug so konfiguriert oder ausgebildet ist, dass es die Indizien drahtlos oder über die elektrischen Eigenschaften der Düse (320, 322, 500) über die Düsenschnittstelle (330, 332, 334) ermittelt.

6. Roboterfahrzeug (10) nach Anspruch 5, das eine Sprühvorrichtung (90) nach Anspruch 4 umfasst, wobei die Steuerschaltung (12) so konfiguriert oder ausgebildet ist, dass sie eine Ventilanordnung (244, 342) steuert, um die Bereitstellung der wässrigen Lösung nur für ausgewählte Düsen aus der Vielzahl der Düsen (320, 322, 500) auszuwählen.

7. Roboterfahrzeug (10) nach Anspruch 6, wobei die Steuerschaltung (12) so konfiguriert oder ausgebildet ist, dass sie die ausgewählten Düsen aus der Vielzahl der Düsen (320, 322, 500) anhand der Nähe des Roboterfahrzeugs (10) zu einer Grenze (30) des Servicebereichs (20) bestimmt.

8. Roboterfahrzeug (10) nach Anspruch 6, wobei die Steuerschaltung (12) so konfiguriert oder ausgebildet ist, dass sie ein Sprühmuster (430) oder eine Breite (W) des von der Düse (320, 322, 500) erzeugten Sprühnebels auf der Grundlage des Betriebs der Ventilanordnung (244, 342) bestimmt;

9. Roboterfahrzeug (10) nach Anspruch 6, wobei die Steuerschaltung (12) so konfiguriert oder ausgebildet ist, dass sie ein Sprühmuster (430) oder eine Breite (W) des von der Düse (320, 322, 500) erzeugten Sprühnebels basierend auf der Steuerung der Pumpe (340) bestimmt.

10. Roboterfahrzeug (10) nach Anspruch 5, umfassend eine Sprühvorrichtung (90) nach Anspruch 4, wobei eine der Vielzahl von Düsen (320, 322, 500) ein erstes Sprühmuster (430) umfasst und eine andere der Vielzahl von Düsen (320, 322, 500) ein zweites Sprühmuster (430) umfasst, das sich von dem ersten Sprühmuster (430) unterscheidet.

11. Roboterfahrzeug (10) nach Anspruch 5, wobei die Steuerschaltung (12) so konfiguriert oder ausgebildet ist, dass sie die Verwendung der Düse (320, 322, 500) überwacht, um den Austausch der Düse (320, 322, 500) auf der Grundlage der Verwendung zu empfehlen.

12. Roboterfahrzeug (10) nach Anspruch 11, wobei die Steuerschaltung (12) so konfiguriert oder ausgebildet ist, dass sie die Betriebsstunden der Düse (320, 322, 500) überwacht, um die Nutzung zu bestimmen.

13. Roboterfahrzeug nach Anspruch 11, wobei die Steuerschaltung (12) so konfiguriert oder ausgebildet ist, dass sie das durch die Düse (320, 322, 500) geleitete Flüssigkeitsvolumen überwacht, um die Nutzung zu bestimmen.

14. Roboterfahrzeug (10) nach Anspruch 5, wobei die wässrige Lösung eine Enteisungslösung ist;
optional, wobei die Steuerschaltung (12) so konfiguriert oder ausgebildet ist, dass sie eine Menge der ausgebrachten Enteisungslösung und einen entsprechenden Zeitpunkt der Ausbringung für jeden Ort des Servicebereichs (20) aufzeichnet.

15. Roboterfahrzeug (10) nach Anspruch 5, wobei die Steuerschaltung (12) so konfiguriert oder ausgebildet ist, dass sie empfohlene Düsen-Indizien bereitstellt, die einer Typklassifizierung der Düse (320, 322, 500) auf der Grundlage eines Typs der wässrigen Lösung entspricht, die in dem Vorratstank bereitgestellt wird.

## Revendications

1. Ensemble de pulvérisation (90) pour un véhicule robotisé (10), l'ensemble de pulvérisation (90) comprenant:
une pompe (340) couplée de manière opérationnelle à un réservoir de stockage (14) contenant une solution aqueuse;
une buse (320, 322, 500) couplée de manière opérationnelle au réservoir de stockage (14) par l'intermédiaire de la pompe (340) afin de générer un modèle de pulvérisation (430) pour pulvériser la solution aqueuse en réponse au fonctionnement de la pompe (340) lorsque le véhicule robotisé (10) traverse une zone de service (20); et
un récepteur de buse (300) configuré pour recevoir la buse (320, 322, 500), et ayant une interface de buse (330, 332, 334) qui peut être couplée de manière opérationnelle à un circuit de commande (12) du véhicule robotisé (10),
dans lequel les caractéristiques de la buse (320, 322, 500) peuvent être déterminées par le circuit de commande (12) pour contrôler une quantité de solution aqueuse appliquée à la zone de service (20) en fonction des caractéristiques de la buse (320, 322, 500);
**caractérisé par le fait que**
la buse (320, 322, 500) comprend des indices indiquant une classification de type de la buse (320, 322, 500), les caractéristiques de la buse (320, 322, 500) étant associées à la classification de type et déterminées sur la base des indices,
**et dans ce**
les indices peuvent être déterminés, via l'interface de la buse (330, 332, 334), sans fil ou par les caractéristiques électriques de la buse.

2. Ensemble de pulvérisation (90) de la revendication 1, dans lequel les indices sont déterminables sans fil, dans lequel l'interface de la buse (330, 332, 334) comprend un lecteur de communication en champ proche (NFC) et les indices sont disposés sur une puce NFC associée à la buse (320, 322, 500).

3. Ensemble de pulvérisation (90) de la revendication 1, dans lequel le récepteur de buse (300) comprend une fente (310, 312, 314) à l'intérieur de laquelle la buse (320, 322, 500) est reçue.

4. Ensemble de pulvérisation (90) de la revendication 1, dans lequel le récepteur de buse (300) comprend une pluralité de fentes (310, 312, 314) pour recevoir une pluralité correspondante de buses (320, 322, 500), et
dans laquelle chacune des fentes (310, 312, 314) possède une instance correspondante de l'interface de buse (330, 332, 334) configurée pour déterminer les caractéristiques respectives de chacune des buses (320, 322, 500).

5. Véhicule robotisé (10) comprenant:
un châssis (400) supportant un réservoir de stockage (14) contenant une solution aqueuse;
un ensemble de mobilité (410) couplé de manière opérationnelle au châssis (400) pour assurer la mobilité du véhicule robotisé (10) dans une zone de service (20);
un module de positionnement (60) configuré pour guider le véhicule robotisé (10) pendant le transit du véhicule robotisé (10) sur la zone de service (20);
un ensemble de pulvérisation (90) selon l'une des revendications 1 à 4, l'ensemble de pulvérisation (90) étant couplé de manière opérationnelle au réservoir de stockage (14) pour pulvériser la solution aqueuse via une buse (320, 322, 500) et une pompe (340) pendant le déplacement du véhicule robotisé (10) sur l'aire de service (20); et
circuit de commande (12) couplé de manière opérationnelle à l'ensemble de pulvérisation (90), le circuit de commande (12) étant configuré pour déterminer les caractéristiques de la buse (320, 322, 500) afin de contrôler une quantité de solution aqueuse appliquée à la zone de service (20) sur la base des caractéristiques de la buse (320, 322, 500), dans lequel
le véhicule robotisé est configuré pour déterminer l'indice sans fil ou par le biais des caractéristiques électriques de la buse (320, 322, 500) via l'interface de la buse (330, 332, 334).

6. Véhicule robotisé (10) de la revendication 5, comprenant un ensemble de pulvérisation (90) selon la revendication 4, dans lequel le circuit de commande (12) est configuré pour commander un ensemble de vannes (244, 342) afin de sélectionner l'apport de la solution aqueuse à seulement des buses sélectionnées parmi la pluralité de buses (320, 322, 500).

7. Véhicule robotisé (10) de la revendication 6, dans lequel le circuit de commande (12) est configuré pour déterminer les buses sélectionnées parmi la pluralité de buses (320, 322, 500) en fonction de la proximité du véhicule robotisé (10) par rapport à une limite (30) de la zone de service (20).

8. Véhicule robotisé (10) de la revendication 6, dans lequel le circuit de commande (12) est configuré pour déterminer un modèle de pulvérisation (430) ou une largeur (W) de la pulvérisation générée par la buse (320, 322, 500) sur la base du fonctionnement de l'ensemble de vannes (244, 342);

9. Véhicule robotisé (10) de la revendication 6, dans lequel le circuit de commande (12) est configuré pour déterminer un modèle de pulvérisation (430) ou une largeur (W) de la pulvérisation générée par la buse (320, 322, 500) sur la base de la commande de la pompe (340).

10. Véhicule robotisé (10) selon la revendication 5, comprenant un ensemble de pulvérisation (90) selon la revendication 4, dans lequel l'une de la pluralité de buses (320, 322, 500) comprend un premier modèle de pulvérisation (430), et une autre de la pluralité de buses (320, 322, 500) comprend un deuxième modèle de pulvérisation (430) qui est différent du premier modèle de pulvérisation (430).

11. Véhicule robotisé (10) de la revendication 5, dans lequel le circuit de commande (12) est configuré pour surveiller l'utilisation de la buse (320, 322, 500) afin de recommander le remplacement de la buse (320, 322, 500) en fonction de l'utilisation.

12. Véhicule robotisé (10) de la revendication 11, dans lequel le circuit de commande (12) est configuré pour surveiller les heures de fonctionnement de la buse (320, 322, 500) afin de déterminer l'utilisation.

13. Véhicule robotisé de la revendication 11, dans lequel le circuit de commande (12) est configuré pour surveiller le volume de fluide passé par la buse (320, 322, 500) afin de déterminer l'utilisation.

14. Véhicule robotisé (10) de la revendication 5, dans lequel la solution aqueuse est une solution de dégivrage;
éventuellement, dans lequel le circuit de commande (12) est configuré pour enregistrer une quantité de solution de dégivrage appliquée et une heure d'application correspondante pour chaque emplacement de la zone de service (20).

15. Véhicule robotisé (10) de la revendication 5, dans lequel le circuit de commande (12) est configuré pour fournir une indication de buse recommandée correspondant à une classification de type de la buse (320, 322, 500) sur la base d'un type de solution aqueuse fournie dans le réservoir de stockage.
